# EUROPEAN PATENT APPLICATION

(11) **EP 1 415 859 A1**
(43) Date of publication of application: **06.05.2004**
(21) Application number: 02024054.5
(22) Date of filing: 28.10.2002
(51) Int. Cl.: B60R 11/02, H04M 1/60, H04M 1/05

(54) **Hands-free handset with noise reduction capability for a vehicular cellular phone**

(71) Applicant: Weiyang Electric Wire & Cable Co., Ltd., Tapei Hsien, R.O.C. (TW)
(72) Inventor: Liou, Jyh-Jye, Taipei Hsien, Taiwan, R.O.C. (TW)
(74) Representative: Casalonga, Axel

(57) **Abstract**

A hands-free handset for a vehicular cellular phone mounted on a driver's seat in a vehicle has a body (10), a microphone (20), a speaker (30) and an audio processing circuit in the body (10). The microphone (20) and the speaker (30) are connected to two sides of the body (10) by adjustable devices (21, 31). The audio processing circuit has a squelch capability to limit noise transmitted from the speaker (30). In addition, the microphone (20) and the speaker (30) can be positioned respectively close to the driver's mouth and the ear so the communication is clear and private.

## Description

### 1. Field of the Invention

The present invention relates to a hands-free handset for a vehicular cellular phone, and more particularly to a hands-free handset that provides effective, private communications in an open space in a vehicle.

### 2. Description of Related Art

A common vehicular cellular phone handset is mounted in a fixed position in the vehicle. Normal vehicular cellular phone handsets are either hardwired to the cell phone or use wireless techniques. A wireless vehicular cellular phone handset broadcasts an audio signal from the cellphone and receives and transmits a person's voice to the vehicular cellular phone. Therefore, the driver can concentrate on driving safely when using the vehicular cellular phone.

Even a wireless vehicular cellular phone handset is mounded at a fixed position in the vehicle a fixed distance from a person speaking into the handset. Consequently, the wireless handset picks up ambient noise in the vehicle. Thus, the voice of the speaker may not be clear. Furthermore, anyone in the vehicle can hear the audio signal broadcast from the handset so the speaker cannot have a private conversation with others in the car.

To overcome the forgoing drawbacks of the handset for a vehicular cellular phone, drivers often use earphones with the vehicular cellular phone. However, the earphones have a possibility of causing higher electromagnetic radiation when using the vehicular cellular phone. The high electromagnetic radiation can affect the health of the body.

To overcome the shortcomings, the present invention provides an improved hands-free handset for a vehicular cellular phone to mitigate or obviate the aforementioned problems.

The main objective of the present invention is to provide a hands-free handset for a vehicular cellular phone that provides good quality transmissions and a private communication capability in an open space in a vehicle.

Other objectives, advantages and novel features of the invention will become more apparent from the following detailed description when taken in conjunction with the accompanying drawings.

### In the drawing

Fig. 1 is a perspective view of a hands-free handset for a vehicular cellular phone in accordance with the present invention;
Fig. 2 is a perspective view of the hands-free handset in Fig. 1 mounted on a vehicle seat;
Fig. 3 is an enlarged cross sectional front plan view of the hands-free handset along line 3-3 in Fig. 1;
Fig. 4 is a block diagram of a circuit in the hands-free handset in accordance with the present invention;
Fig. 5A is a circuit diagram of the audio amplifier in Fig. 4 and a voltage regular;
Fig. 5B is a circuit diagram of the squelch circuit in Fig. 4; and
Fig. 6 is an operational perspective view of the hands-free handset for a vehicular cellular phone in Fig. 1 and a vehicular cellular phone connected to a cigarette lighter plug.

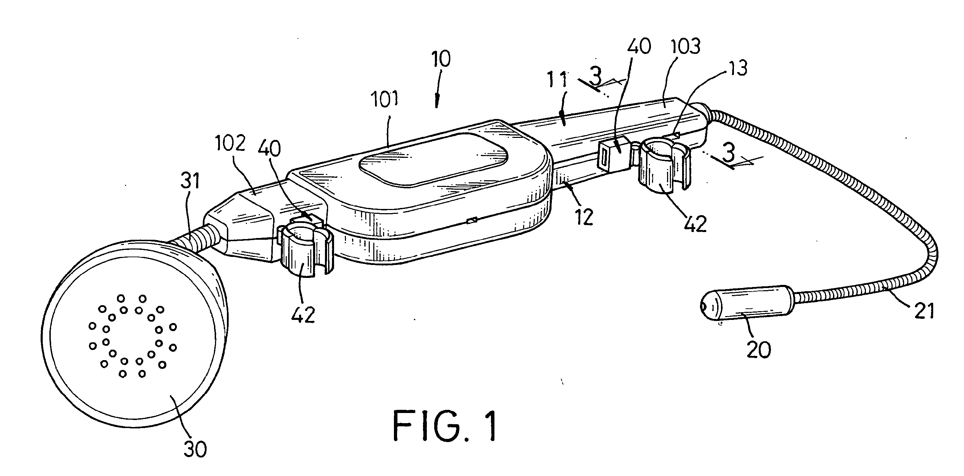

With reference to Fig. 1, a hands-free handset for a vehicular cellular phone comprises a body (10), a microphone (20), a speaker (30) and an audio processing circuit (not shown).

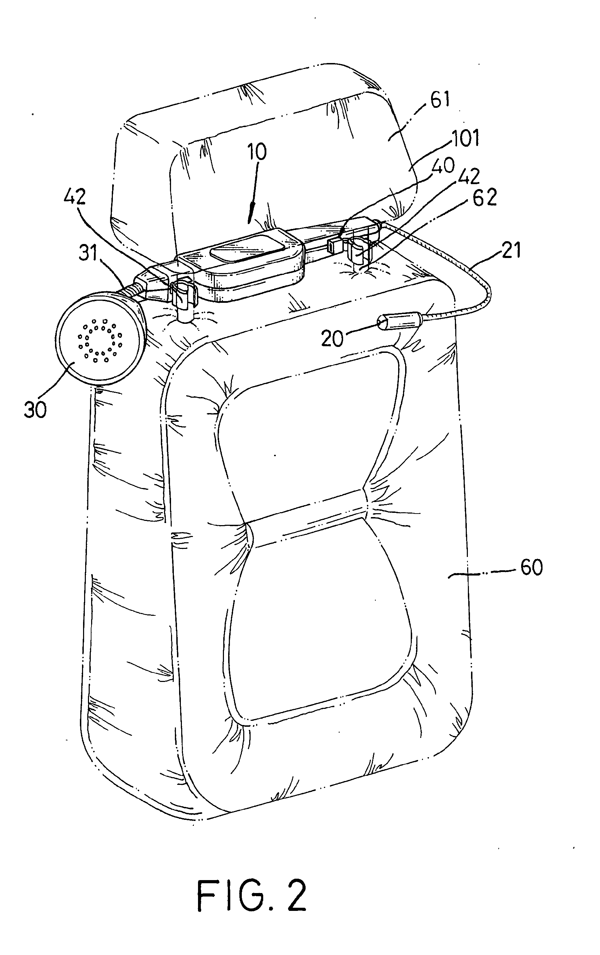

With further reference to Fig. 2, the body (10) is mounted on a driver's seat (60) of a vehicle (not shown) and comprises two symmetrical shells, a top shell (11) and a bottom shell (12), with a joint where the shells (11, 12) connect. The body (10) has a front, a rear, a broad middle housing (101), a short, narrow left side (102) and a long, narrow right side (103). A long slot (13) is defined in the joint between the shells (11, 12) on the front of the right side (103) of the body (10). A connecting device (not numbered) for mounting the body (10) on the driver's seat (60) is connected to the front of the left and right sides (102, 103).

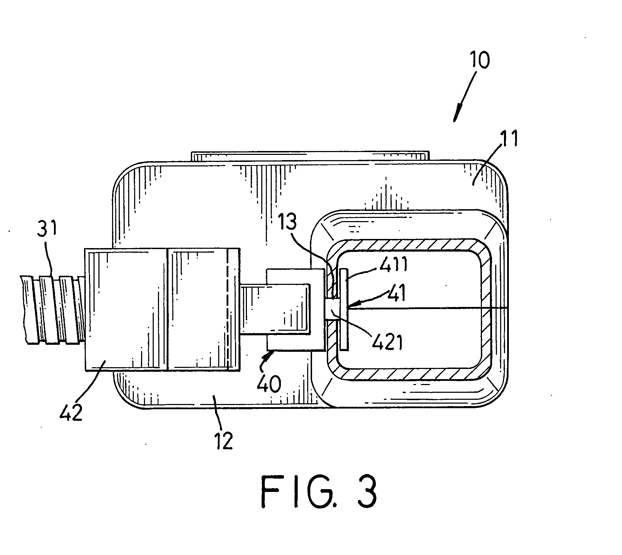

With reference to Fig. 3, the connecting device (not numbered) can be two fasteners (40). The fastener (40) has an inner face (not numbered) and an outer face (not numbered). A T-shaped rail (41) is integrally formed on the inner face and is slidably mounted in the slot (13) between the top and bottom shells (11, 12). The rail (41) has a head (411) and a neck (412). The head (411) is mounted inside the body (10), and the neck (412) passes through the long slot (13) and slidably moves in the long slot (13) so the fastener (40) laterally moves on the right side (102) of the body (10). A C-shaped clip (42) is attached to the fastener (40) and extends from the outer face of the fastener (40).

With reference to Fig. 2, a headrest (61) is mounted on top of the driver's seat (60) by two mounting rods (62). To attach the body (10) of the hands-free handset for a vehicular cellular phone to the driver's seat (60), the clip (42) on each fastener (40) clips onto the corresponding mounting rod (62). The middle housing (101) of the body (10) is positioned between the two mounting rods (62) and below the headrest (61).

The microphone (20) and the speaker (30) are respectively connected to the left and the right sides (102, 103) of the body (10) by flexible tubes (21, 31). Therefore, wires (not shown) for the microphone (20) and the speaker (30) respectively pass through the flexible tubes (21, 31) to connect to the audio processing circuit (not shown) in the body (10).

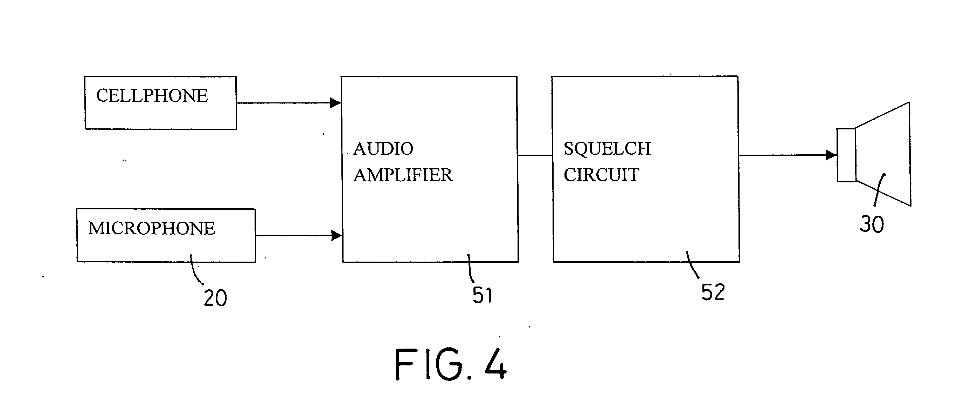

With reference to Fig. 4, the audio processing circuit includes an audio amplifier (51) and a squelch circuit (52). The audio amplifier (51) and the squelch circuit (52) respectively have multiple input and output terminals (not numbered).

The audio amplifier (51) is connected to a vehicular cellular phone (not numbered) through an interface (not shown) to receive and transmit audio signals. The audio amplifier (51) further is connected between the microphone (20) and the squelch circuit (52) to amplify the audio signal from the microphone (20) and outputs amplified audio signal to the squelch circuit (52). The squelch circuit (52) outputs the audio signal from the vehicular cellular phone to the speaker (30). The squelch circuit (52) suppresses noise to the speaker (230) silent when the vehicular cellular phone output has no signal.

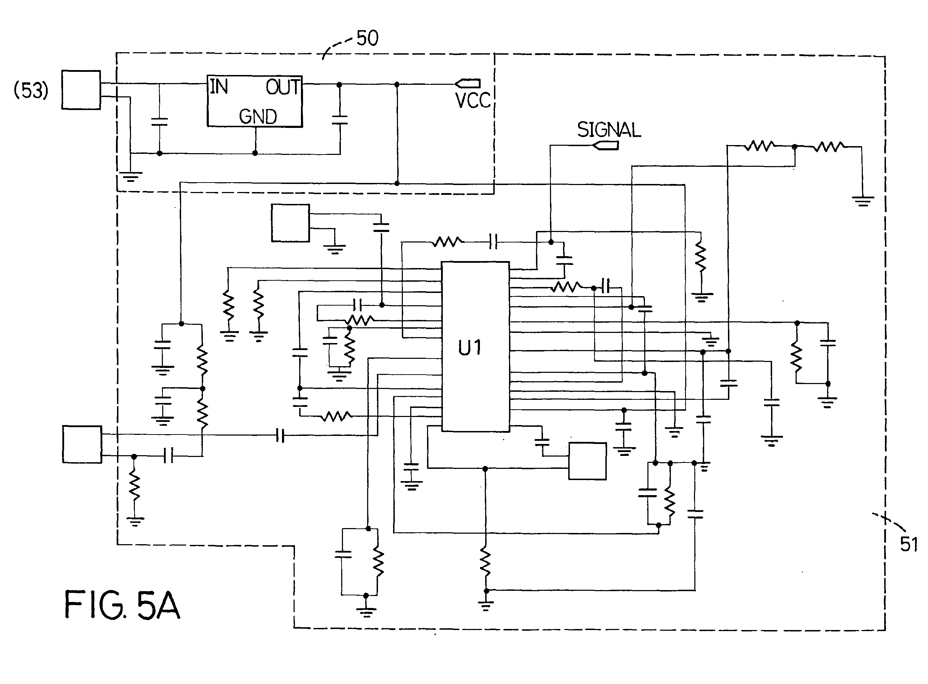

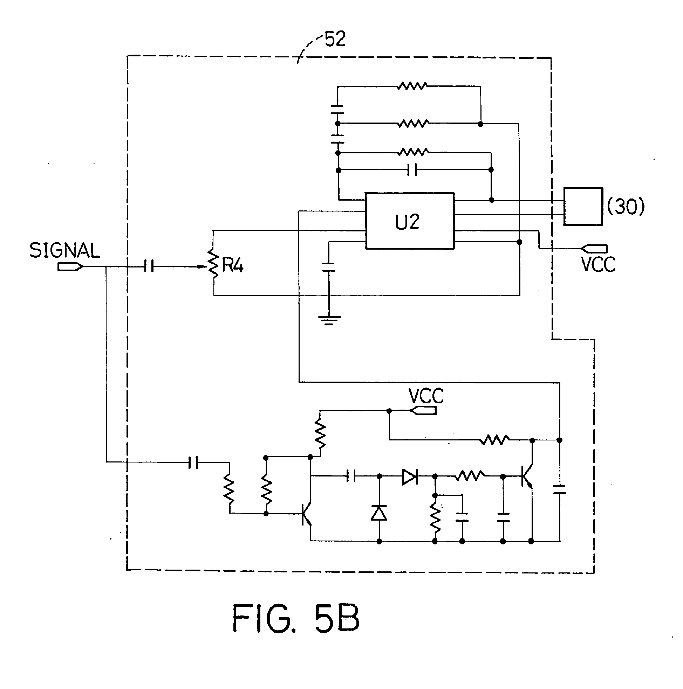

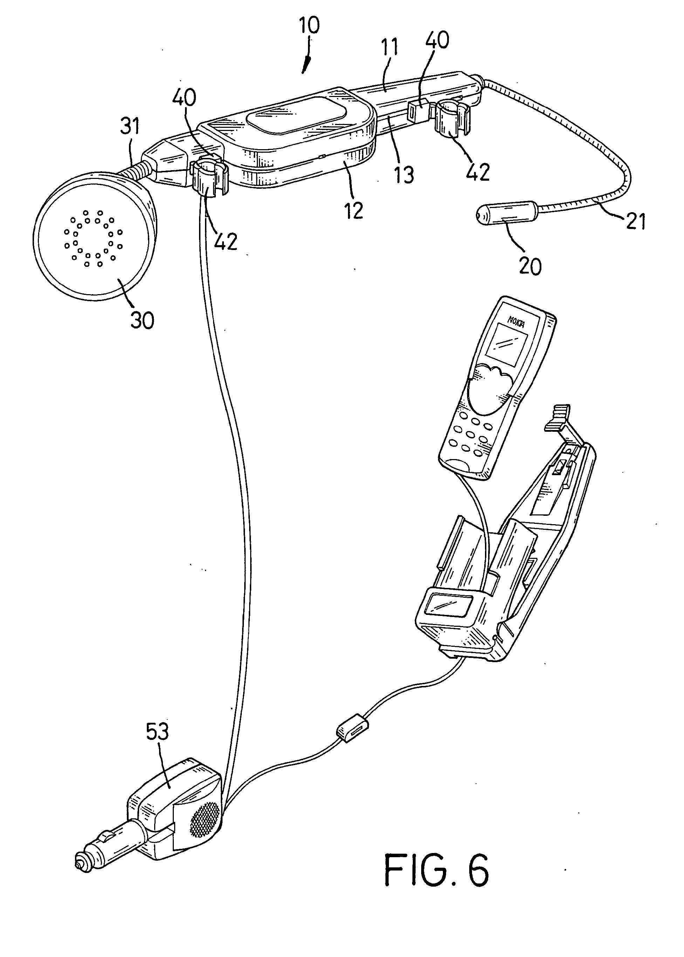

With reference to Figs. 5A and 6, a DC power circuit (not numbered) is composed of a constant voltage regulator (50) whose input terminal (IN) is connected to a vehicle cigarette lighter (not shown) through a cigarette lighter plug (53). With further reference to Fig. 5B, the constant voltage regulator (50) receives DC power through the vehicle cigarette lighter socket (not shown) and provides a constant voltage (VCC) to the audio amplifier (51) and squelch circuit (52).

An input terminal of the squelch circuit (52) is connected to the output terminal of the audio amplifier (51) through a variable resistor (R4) to adjust the current of the output signal from the audio amplifier (51).

The hands-free handset for a vehicular cellular phone can easily be mounted on the driver's seat, and the microphone and the speaker can be adjusted easily. The microphone and the speaker can be positioned respectively very close to the driver's mouth and ear to decrease noise interference so the driver can clearly hear audio from the speaker and has a private communication capability in an open space in the vehicle.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A hands-free handset for a vehicular cellular phone, comprising
a body (10) adapted to be mounted on a driver's seat (60) by a connecting device;
a microphone (20) connected to the body (10) by a first adjustable device (21) to adjust the position of the microphone (20) relative to a driver's mouth; and
a speaker (30) connected to the body (10) by a second adjustable device (31) to adjust the position of the speaker (30) relative to a driver's ear;
whereby the body (10) further comprises an audio processing circuit that is connected between the microphone (20) and the speaker (30) to amplify audio signals and to provide a squelch capability.

2. The hands-free handset as claimed in claim 1, wherein the first adjustable device (21) is a flexible tube between the body (10) and the microphone (20), wherein wires between the audio processing circuit and the microphone (20) are in the flexible tube.

3. The hands-free handset as claimed in claim 1, wherein the second adjustable device (31) is a flexible tube between the body (10) and the speaker (30), wherein wires between the audio processing circuit and the speaker (30) are in the flexible tube.

4. The hands-free handset as claimed in claim 1, wherein the body comprises a short, narrow left side (102), a long, narrow right side (103) and a broad middle housing (101), wherein two long slots (13) are respectively defined on the left and right sides (102, 103).

5. The hands-free handset as claimed in claim 4, wherein the connecting device has two fasteners (40), wherein each fastener (40) has an inner face and an outer face and comprises:
a T-shaped rail (41) integrally formed with the inner face and having a head (411) and a neck (412), wherein the neck (412) is movably positioned in the long slot (13) and the head (411) is positioned in the body (10); and
a C-shaped clip (42) attached to the fastener (41) and extending from the outer face to clip a mounting rod (62) of a headrest (61).

6. The hands-free handset as claimed in claim 1, wherein the audio processing circuit comprises an audio amplifier (51) and a squelch circuit (52), wherein
the audio amplifier (51) is connected between the microphone (20) and the squelch circuit (52) and is adapted to connect to a vehicular cellular phone through an interface; and
the squelch circuit (52) is connected between the audio amplifier (51) and the speaker (30).

7. The hands-free handset as claimed in claim 4, wherein the audio processing circuit is adapted to be connected to a cigarette lighter socket in the vehicle through a cigarette lighter plug (53) to obtain DC power.
